Europäisches Patentamt

European Patent Office

Office européen des brevets

(19)

(11) Veröffentlichungsnummer : **0 069 324
B1**

# EUROPÄISCHE PATENTSCHRIFT

(12)

(45) Veröffentlichungstag der Patentschrift :
24.04.85

(21) Anmeldenummer : 82105738.7

(22) Anmeldetag : 29.06.82

(51) Int. Cl.⁴ : **F 04 B 15/08**

(54) **Pumpvorrichtung für sehr kalte Flüssigkeiten.**

(30) Priorität : 03.07.81 DE 3126293

(43) Veröffentlichungstag der Anmeldung :
12.01.83 Patentblatt 83/02

(45) Bekanntmachung des Hinweises auf die Patenterteilung : 24.04.85 Patentblatt 85/17

(84) Benannte Vertragsstaaten :
CH FR GB LI NL

(56) Entgegenhaltungen :
DE-A- 1 653 578
DE-A- 2 731 805
DE-B- 1 143 528
US-A- 3 212 280
US-A- 3 379 132

(73) Patentinhaber : **Kernforschungsanlage Jülich Gesellschaft mit beschränkter Haftung
Postfach 1913
D-5170 Jülich (DE)**

(72) Erfinder : **Heybutzki, Helmut, Ing.
Kommstrasse 13
D-5170 Jülich (DE)**
Erfinder : **Krug, Wolfgang, Dipl.-Ing.
Siemensstrasse 18
D-5170 Jülich (DE)**
Erfinder : **Seferiadis, Johann, Dipl.-Ing.
Im Wiesengrund 4
D-5170 Jülich (DE)**

(74) Vertreter : **Paul, Dieter-Alfred, Dipl.-Ing.
Erftstrasse 82
D-4040 Neuss 1 (DE)**

EP 0 069 324 B1

Jouve, 18, rue St-Denis, 75001 Paris, France

## Beschreibung

Die Erfindung betrifft eine Pumpvorrichtung für sehr kalte Flüssigkeiten, insbesondere für flüssigen Stickstoff und flüssige Luft, mit einem wärmeisolierten Pumpgefäß und einer darin wärmeisoliert aufgehängten Tauchpumpe, die über eine nach oben aus dem Pumpgefäß herausgeführte Antriebswellse mit einem Antriebsmotor verbunden ist, wobei die Antriebswelle in zumindest einer Lagereinrichtung gelagert ist.

In der DE-B-1 653 578 ist eine solche Pumpvorrichtung dargestellt. Sie weist ein wärmeisoliertes Pumpgefäß auf, in dem Flüssiggas aufbewahrt werden kann. Die Pumpe selbst ist als Tauchpumpe in Form einer Kolbenpumpe ausgebildet, die über einen als Kolbenstange ausgebildeten Antriebsstrang mit einem außen liegenden Antriebsmotor verbunden ist. Die Pumpe ist im oberen Teil des Pumpgefäßes wärmeisoliert aufgehängt.

Das Pumpgefäß ist allerdings nicht druckdicht geschlossen, so daß ein Teil der Flüssigkeit verdampfen und unmittelbar über die Pumpdichtungen nach außen entweichen kann. Ein Einsatz in einem geschlossenen Drucksystem ist demnach mit erheblichen Flüssigkeitsverlusten verbunden. Hinzu kommt, daß der Antriebsstrang ohne Wärmeisolierung herausgeführt ist, wodurch sich die Flüssigkeit erwärmen kann, was die Verdampfung unterstützt. Hierdurch kommt es zu unerwünscht starken Vereisungen.

In der US-A-2 158 182 ist eine Zentrifugalpumpe beschrieben, die für den Einsatz in einem geschlossenem Druckssystem bestimmt ist und deshalb kein als Vorratsbehälter dienendes Pumpgefäß aufweist, in dem eine bestimmte Menge Flüssigkeit bereitgehalten werden kann. Dies hat den Nachteil, daß die Zentrifugalpumpe vor jedem Anfahren längere Zeit von Hand kaltgefahren werden muß, wenn beispielsweise flüssiger Stickstoff oder flüssige Luft gefördert werden soll. Da diese Art von Pumpvorrichtungen zudem nicht wärmeisoliert ist, treten hohe Wärmeverluste mit starkem Vereisen der Pumpe auf.

Die Antriebswelle dieser Pumpvorrichtung ist zwar in zwei voneinander wärmeisolierte Teile aufgegliedert, um die Lager vor Wärmeübertragung von der Pumpe her zu schützen. Da die Aufteilung aber erst außerhalb der Pumpvorrichtung erfolgt, wird dem Pumpeninneren über die Antriebswelle Kälte in gleicher Weiser entzogen, wie über die nicht isolierten Gehäusewände.

Der Erfindung liegt die Aufgabe zugrunde, eine Pumpvorrichtung für sehr kalte Flüssigkeiten so zu gestalten, daß sie in Druckkreisläufen mit minimalen Wärmeverlusten und gegebenenfalls auch automatisch betrieben werden kann.

Diese Aufgabe wird erfindungsgemäß dadurch gelöst, daß das Pumpgefäß druckdicht geschlossen ausgebildet ist, wobei der tauchpumpenseitige Teil des als Antriebswelle ausgebildeten Antriebsstrangs durch eine druckdichte Verschlußkappe abgedeckt und für die Kraftübertragung in diesem Bereich eine Dauermagnetkupplung vorgesehen ist, und daß die Antriebswelle in Richtung auf den Antriebsmotor vor deren Lagereinrichtung ein Isolierstück aufweist.

Aufgrund der druckdicht geschlossenen Ausbildung der Pumpvorrichtung und ferner aufgrund der Wärmeisolierung der Antriebswelle kann die erfindungsgemäße Pumpvorrichtung mit minimalen Wärmeverlusten in Druckkreisläufen eingesetzt werden. Ein automatischer Betrieb ist deswegen möglich, weil in dem Pumpgefäß immer ein bestimmter Flüssigkeitsvorrat gehalten werden kann, der die Tauchpumpe bedeckt, so daß ein Kaltfahren nach Pumpenstillstand nicht erforderlich ist. Die Zweiteilung der Antriebswelle und Kraftübertragung allein über eine Dauermagnetkupplung ermöglicht die vollständige Kapselung der Pumpvorrichtung, wobei sich unter der Kappe ein Gaspolster bilden kann, daß die Flüssigkeit herunterdrückt und somit ein Vereisen in diesem Bereich verhindert.

In Ausbildung der Erfindung ist vorgesehen, daß das Isolierstück im wesentlichen aus Teflonscheiben besteht, da diese Scheiben eine gute Wärmeisolierung und gleichzeitig hinreichende Festigkeit gewährleisten.

Die Tauchpumpe ist mit ihrer Lagereinrichtung zweckmäßigerweise in einem obenseitigen Rohrstutzen des Pumpgefäßes aufgehängt, durch den die Antriebswelle geführt ist. Dabei sollte der Rohrstutzen zur Abschirmung der Lagereinrichtung mit einer Isoliermasse ausgefüllt sein.

Nach einem weiteren Merkmal der Erfindung ist vorgesehen, daß die Tauchpumpe an einem die Antriebswelle umgebenden Isoliermantel befestigt ist. Dieser Isoliermantel kann über eine Traghülse an einem Deckel des Gefäßes befestigt sein, um eine leichte Demontierbarkeit der Tauchpumpe zu erhalten. Der Isoliermantel ist auch hier zweckmäßigerweise aus mehreren Schichten Teflonscheiben hergestellt.

Eine noch weitergehende Isolierwirkung kann dadurch erreicht werden, daß Zwischenräume zwischen dem Isoliermantel und einerseits der Antriebswelle und andererseits ihrer Lagerung vorgesehen werden.

Das Pumpgefäß sollte im Bereich der Herausführung der Antriebswelle einen Gefäßflansch aufweisen, auf den ein Deckel unter Zwischenlegung einer Isolierschicht befestigt ist.

Damit gesichert ist, daß die Tauchpumpe immer unterhalb des Flüssigkeitsspiegels innerhalb des Pumpgefäßes liegt, und somit ein Anfahren der Pumpe ohne vorheriges Kaltfahren möglich ist, ragt in das Pumpengefäß eine Niveauüberwachungssonde hinein, die mit entsprechenden Steuervorrichtungen verbunden sein kann.

Das Pumpengefäß ist zweckmäßigerweise als Dewaregefäß ausgebildet, da sich diese Form besonders eignet. Es sollte mindestens für einen Druck von 4 bar ausgelegt sein.

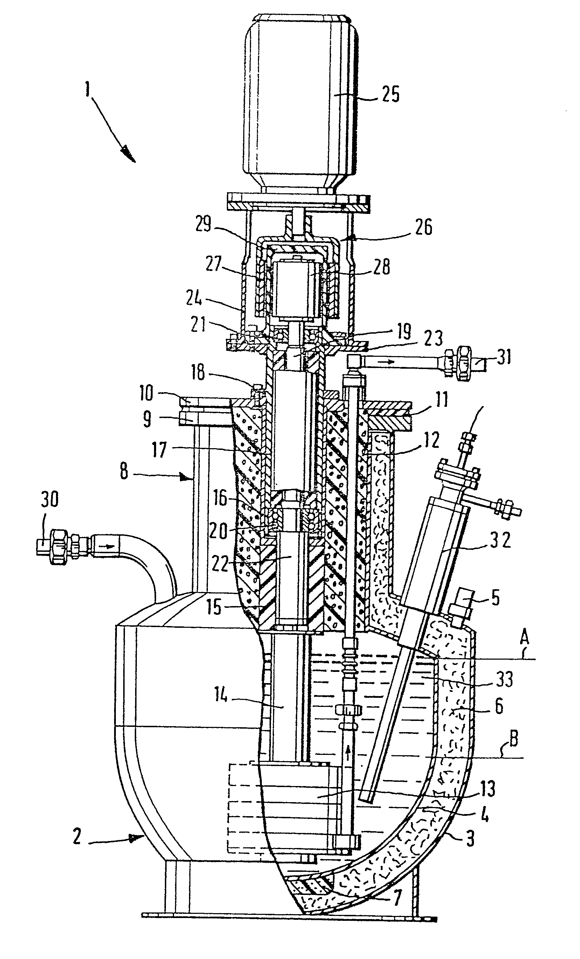

In der Zeichnung ist die Erfindung an Hand eines Ausführungsbeispieles näher veranschaulicht. Sie zeigt eine Pumpvorrichtung 1, die ein als Dewargefäß ausgebildetes Pumpgefäß 2 aufweist. Dieses Pumpgefäß 2 besteht aus einem Außengehäuse 3 und einem im Abstand dazu angeordneten Innengehäuse 4.

Der Zwischenraum zwischen dem Außegenhäuse 3 und dem Innengehäuse 4 ist über ein Evakuierungsventil 5 unter Vakuum gesetzt, um die Wärmeleitung möglichst weitgehend auszuschließen. Das Evakuierungsventil 5 dient dabei gleichzeitig auch als Überdruckventil. Zusätzlich ist in den Zwischenraum eine gefaltete Kunststoffolie 6 mit einseitiger Aluminiumbeschichtung angeordnet, die aufgrund dieser Beschichtung Wärmestrahlungen nach außen hin reflektiert, also einen Wärmeübergang aufgrund von Strahlung verhindert. Im unteren Bereich des Zwischenraumes ist ein Silicalgelpolster 7 vorgesehen, das eventuell im Vakuum von den Oberflächen abdampfende Feuchtigkeit aufnimmt.

Das Pumpgefäß 2 setzt sich nach oben in einen Rohrstutzen 8 fort, der in einem Flansch 9 endet. Auf den Flansch 9 ist ein Deckel 10 unter Zwischenlegung einer Isolierschicht 11 befestigt. An der Innenseite des Innengehäuses 4 ist der Rohrstutzen 8 mit einer dicken Isoliermasse 12 aus geschäumten Kunststoff ausgefüllt, um in diesem Bereich Wärmeübergänge weitestgehend zu verhindern.

In das Pumpgefäß 2 ist unten eine als fünfstufige Kreiselpumpe ausgebildete Tauchpumpe 13 eingesetzt. Deren Pumpenschaft 14 ist mit seinem oberen Ende an einer mehrschichtig aufgebauten, wärmeisolierend wirkenden Teflonhülse 15 befestigt, die gleichfalls wärmeisolierend wirkt. Die Teflonhülse 15 ist in die Isoliermasse 12 eingesetzt und an ihrem oberen Enden an einer mit dem Deckel 10 verbundenen Traghülse 16 befestigt.

In die Traghülse 16 ist ein Lagerbock 17 eingesetzt, der über einen Ringsteg 18 an dem Deckel 10 angeschraubt ist. In dem Lagerbock 17 ist eine Antriebswelle 19 über zwei Wälzlager 20, 21 gelagert. Nach unten hin setzt sich diese Antriebswelle 19 in einem Isolierwellenstück 22 fort, das aus mehrschichtig aufgebauten Teflonscheiben besteht, um einen Wärmeübergang in axialer Richtung zu verhindern. Am unteren Ende ist das Isolierwellenstück 22 mit dem Pumpenschaft 14 verbunden.

Am oberen Ende des Lagerbockes 17 ist ein Ringflansch 23 angeschweißt. Auf dessen äußeren Rand ist eine Motorhalterung 24 aufgeschraubt, deren oberes Ende den als Drehstrommotor ausgebildeten Antriebsmotor 25 trägt. Der Antriebsmotor 25 und die Antriebswelle 19 sind über eine Magnetkupplung 26 berührungslos gekoppelt. Diese Magnetkupplung 26 besteht motorseitig aus einer Magnethülse 27 und antriebswellenseitig aus einem in die Magnethülse 27 hineinreichenden Magnetzylinder 28. Zwischen beiden ist eine den Magnetzylinder 27 abdeckende und am inneren Rand des Ringflansches 23 druckdicht angeschraubte Verschlußkappe 29 vorgesehen. Auf diese Weise ist absolute Dichtigkeit gegeben.

In dieser Ansicht links mündet in das Pumpgefäß 2 eine Zulaufleitung 30 beispielsweise eines geschlossenen Stickstoff-Versorgungskreislaufes. Eine von der Tauchpumpe 13 ausgehende Druckleitung 31 führt zunächst senkrecht hoch durch die Isoliermasse 12, tritt am Deckel 10 aus und biegt rechtwinklig nach rechts ab. In das Pumpgefäß 2 ragt eine Niveauüberwachungssonde 32 hinein, mit deren Hilfe der Vorrat an Flüssigkeit 33 im Bereich zwischen einem Maximalstand (Linie A) und Minimalstand (Linie B) gehalten werden kann. Auf diese Weise befindet sich die Tauchpumpe 13 immer unterhalb des Flüssigkeitsspiegels, so daß keine besonderen Maßnahmen beim Anlaufen der Pumpe getroffen werden müssen.

**Patentansprüche**

1. Pumpvorrichtung (1) für sehr kalte Flüssigkeiten, insbesondere für flüssigen Stickstoff und flüssige Luft, mit einem wärmeisolierten Pumpgefäß (2) und einer darin wärmeisoliert aufgehängten Tauchpumpe (13), die über einen nach oben aus dem Pumpgefäß (2) herausgeführten Antriebsstrang (19) mit einem Antriebsmotor (25) verbunden ist, wobei der Antriebsstrang (19) in zumindest einer Lagereinrichtung (20, 21) gelagert ist, dadurch gekennzeichnet, daß das Pumpgefäß (2) druckdicht geschlossen ausgebildet ist, wobei der tauchpumpenseitige Teil des als Antriebswelle (19) ausgebildeten Antriebsstrangs durch eine druckdichte Verschlußkappe (29) abgedeckt und für die Kraftübertragung in diesem Bereich eine Dauermagnetkupplung (26) vorgesehen ist, und daß die Antriebswelle (19) in Richtung auf den Antriebsmotor (25) vor deren Lagereinrichtung (20, 21) ein Isolierstück (22) aufweist.

2. Pumpvorrichtung nach Anspruch 1, dadurch gekennzeichnet, daß das Isolierstück (22) im wesentlichen aus Teflonscheiben besteht.

3. Pumpvorrichtung nach Anspruch 1 oder 2, dadurch gekennzeichnet, daß die Tauchpumpe (13) mit ihrer Lagereinrichtung (20, 21) in einem obenseitigen Rohrstutzen (8) des Pumpgefäßes (2) aufgehängt ist, durch den die Antriebswelle (19) geführt ist.

4. Pumpvorrichtung nach Anspruch 3, dadurch gekennzeichnet, daß der Rohrstutzen (8) innenseitig mit einer Isoliermasse (12) ausgefüllt ist.

5. Pumpvorrichtung nach einem der Ansprüche 1 bis 4, dadurch gekennzeichnet, daß die Tauchpumpe (13) an einem die Antriebswelle (19) umgebenden Isoliermantel (15) befestigt ist.

6. Pumpvorrichtung nach Anspruch 5, dadurch gekennzeichnet, daß der Isoliermantel (15) im wesentlichen aus mehreren Schichten Teflonscheiben besteht.

7. Pumpvorrichtung nach Anspruch 4 oder 5, dadurch gekennzeichnet, daß der Isoliermantel (15) über eine Traghülse (16) an einem Deckel (10) des Pumpgefäßes (2) befestigt ist.

8. Pumpvorrichtung nach einem der Ansprüche 5 bis 7, dadurch gekennzeichnet, daß ein Zwischenraum zwischen dem Isoliermantel (15) und einerseits der Antriebswelle (19, 22) und andererseits ihrer Lagerung (17, 20, 21) vorgesehen sind.

9. Pumpvorrichtung nach einem der Ansprüche 1 bis 8, dadurch gekennzeichnet, daß das Pumpgefäß (2) im Bereich der Herausführung der Antriebswelle (19) einen Gefäßflansch (9) aufweist, auf den ein Deckel (10) unter Zwischenlegung einer Isolierschicht (11) befestigt ist.

10. Pumpvorrichtung nach einem der Ansprüche 1 bis 9, dadurch gekennzeichnet, daß das Pumpgefäß (2) mindestens für einen Druck von 4 bar ausgelegt ist.

11. Pumpvorrichtung nach einem der Ansprüche 1 to 10, dadurch gekennzeichnet, daß das Pumpgefäß (2) als Dewargefäß ausgebildet ist.

12. Pumpvorrichtung nach einem der Ansprüche 1 bis 11, dadurch gekennzeichnet, daß in das Pumpgefäß (2) eine Niveauüberwachungssonde (32) hineinragt.

## Claims

1. Pumping apparatus (1) for very cold liquids, especially for liquid nitrogen and liquid air, with a thermally insulated pump vessel (2) and with an immersion pump (13) which is suspended in said vessel in thermally insulated manner and which is connected to a drive motor (25) via a drive line (19) taken upwards out of the pump vessel (2), wherein the drive line (19) is mounted in at least one bearing arrangement (20, 21), characterized in that the pump vessel (2) is of pressure-tight closed construction, and the immersion pump side portion of the drive line, which is constructed as a drive shaft (19), is covered with a pressure-tight closure cap (29), and a permanent-magnet coupling (26) is provided for transmission of force in this region, and that the drive shaft (19) comprises an insulating element (22) before the shaft bearing arrangement (20, 21) in the direction towards the drive motor (25).

2. Pumping apparatus according to claim 1, characterised in that the insulating element (22) is made substantially from polytetrafluoroethylene discs.

3. Pumping apparatus according to claim 1 or 2, characterised in that the immersion pump (13) with its bearing arrangement (20, 21) is suspended in a topside tubular neck (8) of the pump vessel (2), the drive shaft (19) being taken through this neck.

4. Pumping apparatus according to claim 3, characterised in that the tubular neck (8) is filled internally with an insulating material (12).

5. Pumping apparatus according to one of claims 1 to 4, characterised in that the immersion pump (13) is secured on an insulating envelope (15) surrounding the drive shaft (19).

6. Pumping apparatus according to claim 5, characterized in that the insulating envelope (15) is made substantially of a plurality of layers of polytetrafluoroethylene discs.

7. Pumping apparatus according to claim 4 or 5, characterised in that the insulating envelope (15) in secured to a cover (10) of the pump vessel (2) by means of a supporting sleeve (16).

8. Pumping apparatus according to one of claims 5 to 7, characterised in that a space is provided between the insulating envelope (15) and the drive shaft (19, 22) on the one hand and a space is provided between said envelope and the shaft bearing arrangement (17, 20, 21) on the other hand.

9. Pumping apparatus according to one of claims 1 to 8, characterised in that the pump vessel (2) comprises in the region where the drive shaft (19) is taken out a vessel flange (9) on to which a cover (10) is secured with interposition of an insulating layer (11).

10. Pumping apparatus according to one of claims 1 to 9, characterised in that the pump vessel (2) is designed at least for a pressure of 4 bars.

11. Pumping apparatus according to one of claims 1 to 10, characterised in that the pump vessel (2) is constructed as a Dewar flask.

12. Pumping apparatus according to one of claims 1 to 11, characterised in that a level monitoring probe (32) projects into the pump vessel (2).

## Revendications

1. Dispositif de pompage (1) de liquides très froids, notamment d'azote liquide et d'air liquide, comprenant un récipient à pompe (2), qui est calorifugé et une pompe immergée (13) qui y est suspendue de manière calorifugée et qui est reliée à un moteur d'entraînement (25) par un axe d'entraînement (19) sortant du récipient à pompe (2) par le haut, l'axe d'entraînement (9), étant monté sur au moins un dispositif à paliers (20, 21), caractérisé en ce que le récipient à pompe (2) est agencé en étant fermé d'une manière tenant la pression, la partie de l'axe d'entraînement, agencée en arbre d'entraînement (19), du côté de la pompe immergée étant recouverte d'un capot de fermeture (29) tenant la pression et, pour la transmission de la force, il est prévu dans cette région un accouplement à aimants permanents (26), et en ce que l'arbre d'entraînement (19) présente une pièce isolante (22) dans la direction du moteur d'entraînement (25) en amont de son dispositif à paliers (20, 21).

2. Dispositif de pompage suivant la revendication 1, caractérisé en ce que la pièce isolante (22) est constituée, pour l'essentiel, de disques en Téflon.

3. Dispositif de pompage suivant la revendication 1 ou 2, caractérisé en ce que la pompe immergée (13) est suspendue, avec son dispositif à paliers (20, 21), dans une tubulure (8) se trouvant du côté du haut du récipient à pompe (2) et à travers laquelle passe l'arbre d'entraînement (19).

4. Dispositif de pompage suivant la revendication 3, caractérisé en ce que la tubulure (8) est remplie, du côté intérieur, d'une masse isolante (12).

5. Dispositif de pompage suivant l'une des revendications 1 à 4, caractérisé en ce que la pompe immergée (13) est fixée à une chemise isolante (15) entourant l'arbre d'entraînement (19).

6. Dispositif de pompage suivant la revendication 5, caractérisé en ce que la chemise isolante (15) est constituée, pour l'essentiel, de plusieurs couches de disques de Téflon.

7. Dispositif de pompage suivant la revendication 4 ou 5, caractérisé en ce que la chemise isolante (15) est fixée à un couvercle (10) du récipient à pompe (2), par une douille-support (16).

8. Dispositif de pompage suivant l'une des revendications 5 à 7, caractérisé en ce qu'il est prévu des chambres intermédiaires entre la chemise isolante (15) et l'arbre d'entraînement (19, 22), d'une part, et ses paliers (17, 20, 21) d'autre part.

9. Dispositif de pompage suivant l'une des revendications 1 à 8, caractérisé en ce que le récipient à pompe (2) présente, dans la région de la sortie de l'arbre d'entraînement (19) une bride de récipient (9) sur laquelle est fixé un couvercle (10) avec interposition d'une couche isolante (11).

10. Dispositif de pompage suivant l'une des revendications 1 à 9, caractérisé en ce que le récipient à pompe (2) est conçu pour au moins une pression de 4 bar.

11. Dispositif de pompage suivant l'une des revendications 1 à 10, caractérisé en ce que le récipient à pompe (2) est agencé en vase Dewar.

12. Dispositif de pompage suivant l'une des revendications 1 à 11, caractérisé en ce qu'une sonde de surveillance du niveau (32) fait saillie dans le récipient à pompe (2).